(19) Europäisches Patentamt
European Patent Office
Office européen des brevets

(11) EP 3 260 906 A1

(12) EUROPEAN PATENT APPLICATION
published in accordance with Art. 153(4) EPC

(43) Date of publication:
27.12.2017 Bulletin 2017/52

(51) Int Cl.:
G02B 27/01 (2006.01)     B60J 1/00 (2006.01)
B60J 1/02 (2006.01)     C03C 27/12 (2006.01)
G02B 5/26 (2006.01)     G02B 5/30 (2006.01)

(21) Application number: 16752573.2

(22) Date of filing: 19.02.2016

(86) International application number:
PCT/JP2016/054791

(87) International publication number:
WO 2016/133187 (25.08.2016 Gazette 2016/34)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 20.02.2015 JP 2015032024

(71) Applicant: Fujifilm Corporation
Minato-ku
Tokyo 106-8620 (JP)

(72) Inventors:
• ANZAI Akihiro
Minami-ashigara-shi
Kanagawa 250-0193 (JP)
• ICHIHASHI Mitsuyoshi
Minami-ashigara-shi
Kanagawa 250-0193 (JP)
• OKI Kazuhiro
Minami-ashigara-shi
Kanagawa 250-0193 (JP)

(74) Representative: Klunker IP
Patentanwälte PartG mbB
Destouchesstraße 68
80796 München (DE)

(54) WINDSHIELD GLASS AND HEAD-UP DISPLAY SYSTEM

(57) According to the invention, provided are a windshield glass including: a projected image display portion on which a projected image is displayed with projected light; and a second glass plate, an intermediate layer, and a first glass plate provided in this order from an incidence side of the projected light, in which the intermediate layer has awedge-shaped cross section, the projected image display portion at least includes a half-mirror film, and the half-mirror film includes a cholesteric liquid crystal layer, and a head-up display system including the windshield glass. According to the windshield glass of the invention, it is possible to perform a display of a projected image having high brightness, in which generation of a double image is reduced.

FIG. 1

**Description**

**BACKGROUND OF THE INVENTION**

1. Field of the Invention

The present invention relates to a windshield glass. The invention more specifically relates to a windshield glass capable of being used as a combiner in a head-up display system. The invention further relates to a head-up display system using the windshield glass.

2. Description of the Related Art

In a head-up display system, a combiner capable of displaying projected images and the driver's field of view at the same time is used. In a head-up display system using a combiner provided on the windshield glass, a double image formed by light reflected on a front surface or a rear surface of the glass is significantly easily generated, and thus, various solving methods have been proposed in the related art.
For example, JP2011-505330A discloses a technology of reducing the generation of double images by using a curved front glass for a car, which is formed of a laminated glass having a wedge-shaped cross section. In addition, for example, as disclosed in JP2006-512622A, a technology of allowing projected light which is p-polarized light to be incident at Brewster's angle and preventing light from being reflected from a surface of a projected image display member to solve the problem regarding a double image is widely known.

**SUMMARY OF THE INVENTION**

With the technology disclosed in JP2011-505330A, the problem regarding a double image is solved, but a problem regarding low brightness of a projected image has occurred. In addition, even with a method using Brewster's angle disclosed in JP2006-512622A, the improvement of brightness of a projected image while solving the problem regarding a double image has not yet been achieved.
An object of the invention is to provide a windshield glass for a head-up display system, on which generation of double images is reduced and a projected image having high brightness can be displayed. Another object of the invention is to provide a head-up display system in which double images are hardly generated and which applies a projected image having high brightness.
In order to solve the above-mentioned problems, the inventors investigated a windshield glass using a cholesteric liquid crystal layer in a projected image display portion. In the investigation, a windshield glass formed of a wedge-shaped laminated glass capable of reducing the generation of double images and a cholesteric liquid crystal layer were combined with each other, and it was found that the brightness of a projected image was significantly improved. In addition, it was found that, when natural light including both p-polarized light and s-polarized light was used as projected light, the brightness thereof was particularly significantly improved. The inventors further researched based on these findings and completed the invention.
That is, the invention provides the following [1] to [18].

[1] A windshield glass comprising: a projected image display portion on which a projected image is displayed with projected light; and a second glass plate, an intermediate layer, and a first glass plate provided in this order from an incidence side of the projected light, in which the intermediate layer has a wedge-shaped cross section, the projected image display portion at least includes a half-mirror film, and the half-mirror film includes a cholesteric liquid crystal layer.
[2] The windshield glass according to [1], in which, in the projected image display portion, the first glass plate, the intermediate layer, the second glass plate, and the half-mirror film are provided in this order.
[3] The windshield glass according to [1], in which the half-mirror film is included in the intermediate layer.
[4] The windshield glass according to any one of [1] to [3], in which the half-mirror film includes two or more cholesteric liquid crystal layers, and center wavelengths of selective reflection of the two or more cholesteric liquid crystal layers are different from each other.
[5] The windshield glass according to [4], in which the half-mirror film includes a cholesteric liquid crystal layer having a center wavelength of selective reflection at 680 nm to 850 nm, a cholesteric liquid crystal layer having a center wavelength of selective reflection at 600 nm to 680 nm, and a cholesteric liquid crystal layer having a center wavelength of selective reflection at 490 nm to 600 nm.
[6] The windshield glass according to [4] or [5], in which the cholesteric liquid crystal layer closest to the incidence side of the projected light has the longest center wavelength of selective reflection.

[7] The windshield glass according to [6], in which the half-mirror film includes a cholesteric liquid crystal layer having a center wavelength of selective reflection at 580 to 700 nm, a cholesteric liquid crystal layer having a center wavelength of selective reflection at 500 to 580 nm, and a cholesteric liquid crystal layer having a center wavelength of selective reflection at 400 to 500 nm, in this order from the incidence side of the projected light.

[8] The windshield glass according to any one of [1] to [4], in which the half-mirror film includes a λ/2 retardation layer on the incidence side of the projected light of the cholesteric liquid crystal layer.

[9] The windshield glass according to [8], in which a front phase difference of the λ/2 retardation layer is in a range of 190 nm to 390 nm.

[10] The windshield glass according to [8] or [9], in which the half-mirror film includes the λ/2 retardation layer, a cholesteric liquid crystal layer having a center wavelength of selective reflection at 490 nm to 600 nm, a cholesteric liquid crystal layer having a center wavelength of selective reflection at 600 nm to 680 nm, and a cholesteric liquid crystal layer having a center wavelength of selective reflection at 680 nm to 850 nm in this order.

[11] The windshield glass according to any one of [8] to [10], in which a slow axis of the λ/2 retardation layer with respect to an upper vertical direction of the windshield glass is in a range of +40° to +65° or in a range of -40° to -65°.

[12] The windshield glass according to any one of [1] to [11], in which the intermediate layer is a resin film.

[13] The windshield glass according to [12], in which the resin film includes polyvinylbutyral.

[14] A head-up display system comprising: the windshield glass according to any one of [1] to [13]; and a projector which emits the projected light.

[15] The head-up display system according to [14], in which the projected light contains p-polarized light vibrating in a direction parallel to a plane of incidence and s-polarized light vibrating in a direction perpendicular to the plane of incidence.

[16] The head-up display system according to [15], in which the projector is a digital light processing type projector.

[17] The head-up display system according to [15] or [16], in which the projected light is incident at an angle of 45° to 70° with respect to a normal line of a surface of the projected image display portion on the incidence side of the projected light.

[18] The head-up display system according to any one of [14] to [17], in which the projected light is incident from the bottom at the time of using the windshield glass.

According to the invention, a windshield glass for a head-up display system, on which generation of double images is reduced and a projected image having high brightness, can be displayed is provided. According to the invention, it is possible to realize a head-up display system in which double images are hardly generated and which applies a projected image having high brightness. In the head-up display system of the invention, a clear projected image can be observed, even when the projected image is observed through polarized sunglasses.

## BRIEF DESCRIPTION OF THE DRAWINGS

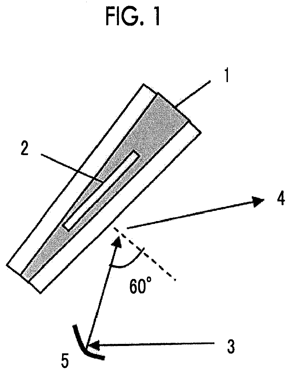

Fig. 1 is a view showing a relationship between a sample, a projector, and an observation position, at the time of evaluation in examples.

## DESCRIPTION OF THE PREFERRED EMBODIMENTS

Hereinafter, the invention will be described in detail.

In the specification, "to" is used as a meaning including numerical values disclosed before and after "to" as a lower limit value and an upper limit value.

In addition, in the specification, angles (for example, angles of "90°" and the like) and relationships thereof (for example, "parallel", "horizontal", and "perpendicular" states) include a range of errors allowed in the technical field of the invention. For example, this means that the error is in a range of less than ± 10° from an exact angle and the error from the exact angle is preferably equal to or smaller than 5° and more preferably equal to or smaller than 3°.

In the specification, when an expression "selective" is used regarding circularly polarized light, the light intensity of any one of a right-handed circularly polarized light component and a left-handed circularly polarized light component of incident light is greater than the light intensity of the other circularly polarized light components. Specifically, when an expression "selective" is used, a degree of circular polarization of light is preferably equal to or greater than 0.3, more preferably equal to or greater than 0.6, and even more preferably equal to or greater than 0.8. Substantially, the degree of circular polarization of light is still more preferably 1.0. Here, when the intensity of a right-handed circularly polarized light component of light is set as $I_R$ and the intensity of a left-handed circularly polarized light component of light is set as $I_L$, the degree of circular polarization is a value represented by $|I_R - I_L|/(I_R + I_L)$. In order to represent a ratio of the circularly polarized light components of light, the degree of circular polarization may be used in the specification.

In the specification, a term "sense" regarding circularly polarized light means right-handed circularly polarized light or left-handed circularly polarized light. In a case of observing light so that light is emitted frontward, the sense of the circularly polarized light is right-handed circularly polarized light in a case where an end point of an electric field vector rotates clockwise in accordance with the lapse of time, and the sense of the circularly polarized light is left-handed circularly polarized light in a case where an end point of an electric field vector rotates anticlockwise.

In the specification, a term "sense" may be used in regards to a twisting direction of a helix of a cholesteric liquid crystal. In a case where a twisting direction (sense) of a helix of a cholesteric liquid crystal is right, the cholesteric liquid crystal reflects right-handed circularly polarized light and transmits left-handed circularly polarized light, and in a case where the sense is left, the cholesteric liquid crystal reflects left-handed circularly polarized light and transmits right-handed circularly polarized light.

In the specification, a term "light" means light of visible light and natural light (non-polarized light), unless otherwise noted. A visible ray is light at a wavelength which is visible to the human eye, among electromagnetic waves, and is normally light in a wavelength region of 380 nm to 780 nm.

In the specification, a measurement of light intensity which is necessary for the calculation of light transmittance may be performed by any method, as long as light intensity is, for example, measured with a typical visible spectrometer by using reference as air.

In the specification, when terms "reflected light" or "transmitted light" are simply used, the terms means are used as meanings to include scattered light and diffracted light.

A polarized state of light at each wavelength can be measured with a spectral radiance meter or a spectrometer on which a circularly polarizing plate is mounted. In this case, the intensity of light measured through a right-handed circularly polarizing plate corresponds to $I_R$, and the intensity of light measured through a left-handed circularly polarizing plate corresponds to $I_L$. In addition, the polarized state can also be measured by attaching a measuring object to an illuminance meter or an optical spectrometer. The right-handed circularly polarized light intensity is measured by attaching a right-handed circularly polarized light transmission plate thereto, the left-handed circularly polarized light intensity is measured by attaching a left-handed circularly polarized light transmission plate thereto, and thus, a ratio therebetween can be measured.

In the specification, p-polarized light means polarized light which vibrates in a direction parallel to a plane of incidence of light. The plane of incidence means a surface which is perpendicular to a reflecting surface (windshield glass surface or the like) and contains the incident rays and reflected rays. A vibrating surface of an electric field vector of the p-polarized light is parallel to the plane of incidence. S-polarized light means polarized light which vibrates in a direction perpendicular to the plane of incidence. That is, the s-polarized light vibrates in a direction perpendicular to the vibration direction of the p-polarized light.

In the specification, a front phase difference is a value measured with AxoScan manufactured by Axometrics, Inc. The measurement wavelength is set as 550 nm. Regarding the front phase difference, a value measured by emitting light in a visible light wavelength region of a center wavelength of selective reflection of cholesteric liquid crystal layers in a film normal direction by using KOBRA 21ADH or WR (manufactured by Oji Scientific Instruments) can also be used. In regards to the selection of the measurement wavelength, a wavelength selective filter can be manuallyreplaced or a measurement value can be measured by replacing a program or the like.

In the specification, a value of birefringence ($\Delta$n) of a liquid crystal compound is a value measured by a method disclosed on p. 202 of Handbook of liquid crystals (Editorial Committee of Handbook of liquid crystals). Specifically, a liquid crystal compound is injected to awedge-shaped cell, light at a wavelength of 550 nm is incident thereto, a refractive angle of the transmitted light is measured, and thus, $\Delta$n at 60°C is acquired.

<Windshield Glass>

In the specification, a windshield glass generally means a window glass of wheeled vehicles such as cars and trains, and vehicles such as airplanes, ships, and play equipment. The windshield glass is preferably the front glass in the travelling direction of vehicles. The windshield glass is preferably a front glass of wheeled vehicles. The windshield of a motorcycle is also one kind of the windshield glass.

The windshield glass of the invention includes laminated glass. The laminated glass has a structure in which two glass plates are bonded to each other with an intermediate layer interposed therebetween. In the specification, in the windshield glass, a glass plate which is at a position farther from an incidence side of projected light (normally, an observer side and an inner side of a vehicle) may be referred to as a first glass plate and a glass plate which is at a position closer to the incidence side may be referred to as a second glass plate. The laminated glass of the windshield glass of the invention has awedge-shaped cross section.

The windshield glass may have a plate shape or sheet shape. The windshield glass may be formed for a built-in windshield glass for a vehicle to which the windshield is applied, and may have, for example, a curved surface. In the windshield glass formed for a vehicle to which the windshield is applied, an upward direction (vertically) and a surface on an incidence side of projected light at the time of usage can be generally specified. For example, in the windshield glass formed to have a curved surface so as to be used for a wheeled vehicle, the inner side of the curved surface may be generally set as the incidence side of the projected light.

[Projected Image Display Portion]

The windshield glass of the invention includes a projected image display portion and a projected image can be displayed on the projected image display portion with projected light.

In the specification, the projected image means an image which is not the surrounding outside views, but is formed based on the projection of light from a projector being used. The projected image may be a monochrome image or may be a multi-colored or full-colored image. The projected image obtained by using the windshield glass of the invention is observed as a virtual image which is observed by an observer as the projected image is floated over the projected image display portion.

In the specification, the projected image display portion is a part of a surface or the entire surface of the windshield glass, which is on the incidence side of the projected light, and the projected image display portion indicates a portion including all of the constituent elements of a part of the surface or the entire surface, in a thickness direction of the windshield glass. It is preferable that the film thickness of the upper end of the projected image display portion is greater than the film thickness of the lower end thereof.

In the windshield glass, the projected image display portion may be provided at any position on the surface on the incidence side of the projected light, and the projected image display portion is preferably provided so that a projected image (virtual image) is displayed at a position where the projected image can be easily observed by an observer (for example, a driver), when the windshield glass is used in a head-up display system. For example, the position of the projected image display portion may be determined in accordance with a relationship between a position of a driver's seat in a vehicle to which the windshield is applied, and a position where a projector is provided.

In a case of using the windshield glass of the invention in a head-up display system, the projected image display portion functions as a combiner. The combiner can display a projected image (virtual image) formed of a projected image from a projector and the like to be visually recognized. In addition, when the combiner is observed from a side of the same surface where the image is displayed, information or outside views on a side of the opposite surface can also be observed at the same time. That is, the projected image display portion of the windshield glass of the invention functions as an optical path combiner which displays external light and projected light in a superposed manner. In another viewpoint, the combiner functions as a half mirror which displays a projected image formed by the reflected light and an image formed by the transmitted light together.

In the windshield glass, the projected image display portion at least includes a half-mirror film including a cholesteric liquid crystal layer, and a function of the combiner in the projected image display portion is achieved. The windshield glass of the invention may include a half-mirror film, the second glass plate, and the first glass plate in this order from the incidence side of the projected light, or may include the second glass plate, the half-mirror film, and the first glass plate in this order from the incidence side of the projected light.

[Half-Mirror Film]

The half-mirror film includes a cholesteric liquid crystal layer. The inventors found that, when a combination of laminated glass having awedge-shaped cross section and a half-mirror film including a cholesteric liquid crystal layer is used for display of a projected image on the windshield glass, generation of double images is reduced and brightness is significantly improved. The half-mirror film may include layers such as a retardation layer, an orientation layer, a support, and an adhesive layer which will be described later, in addition to the cholesteric liquid crystal layer.

The half-mirror film may have a film shape of a thin film or a sheet shape. The half-mirror film may have a flat surface shape without a curved surface, or may include a curved surface. In addition, the whole half-mirror film may have a concave shape or a convex shape and display a projected image that may be expanded or contracted. Further, the half-mirror film may have the shapes described above in combination with other members by bonding, and the half-mirror film may have a roll shape as a thin film, before combining.

In the windshield glass of the invention, the half-mirror film may be bonded to the surface of the glass plate or may be included in the intermediate layer of the laminated glass. Specifically, the half-mirror film may be bonded to the surface of the glass plate or the laminated glass on the incidence side of the projected light, or, as will be described later, may be stuck on an intermediate film sheet for forming the intermediate layer of the laminated glass or may be formed as a laminated intermediate film sheet for the laminated glass. In addition, the windshield glass may be obtained by bonding the half-mirror film to a surface of the second glass plate which is a surface on the intermediate layer side and manufacturing the laminated glass, as will be described later, by using the bonded second glass plate. It is preferable that the half-mirror film is bonded to the surface of the glass plate or the laminated glass on the incidence side of the projected light, because the film thickness of the layer on the visible side with respect to the cholesteric liquid crystal layer which will be described later can be decreased, and thus, generation of a double image is further reduced. It is preferable that the half-mirror film is included in the intermediate layer of the windshield glass having a configuration including the laminated glass, because it is possible to prevent degradation or scratches on the half-mirror film. In addition, the half-mirror film may be preferably included in the intermediate layer for visual appearance, because the half-mirror film is not recognized from the outer surface.

In the specification, a state where the half-mirror film is bonded to the surface of the glass plate or the laminated glass on the incidence side of the projected light may be referred to as "outer sticking", and a state where the half-mirror film is included in the intermediate layer of the windshield glass having a configuration including the laminated glass may be referred to as "inner formation".

The half-mirror film may have a function as a half mirror, at least, with respect to light projected on the projected image display portion, and it is not necessary that the half-mirror film functions as a half mirror with respect to light in the entire wavelength region of 380 nm to 850 nm, for example. In addition, the half-mirror film may have a function as the half mirror with respect to light at all angles of incidence, and may have a function as the half mirror, at least, with respect to light at some angles of incidence.

The half-mirror film preferably has visible light transmittance, in order to observe information or outside views on the side of the opposite surface. The half-mirror film may have light transmittance which is equal to or greater than 40%, preferably equal to or greater than 50%, more preferably equal to or greater than 60%, and even more preferably equal to or greater than 70%, in 80% or more, preferably 90% or more, and more preferably 100% of a wavelength region of visible light.

[Cholesteric Liquid Crystal Layer]

The half-mirror film includes a cholesteric liquid crystal layer.

In the specification, the cholesteric liquid crystal layer means a layer obtained by fixing a cholesteric liquid crystalline phase. The cholesteric liquid crystal layer may be simply referred to as a liquid crystal layer.

It is known that the cholesteric liquid crystalline phase exhibits circularly polarized light selective reflection of selectively reflecting circularly polarized light of any one sense of right-handed circularly polarized light and left-handed circularly polarized light in a specific wavelength region, and transmitting circularly polarized light of the other sense. In the specification, the circularly polarized light selective reflection may be simply referred to as selective reflection.

A large number of films formed of a composition including a polymerizable liquid crystal compound is known in the related art, as a film including a layer obtained by fixing a cholesteric liquid crystalline phase exhibiting circularly polarized light selective reflection properties, and thus, regarding the cholesteric liquid crystal layer, the technologies of the related art can be referred to.

The cholesteric liquid crystal layer may be a layer in which orientation of a liquid crystal compound as the cholesteric liquid crystalline phase is maintained, and typically, may be a layer obtained by setting a state of polymerizable liquid crystal compound in an orientation state of cholesteric liquid crystalline phase, polymerizing and curing the polymerizable liquid crystal compound by ultraviolet light irradiation or heating to form a layer having no fluidity, and, at the same time, changing the state thereof to a state where a change does not occur in the orientation state due to an external field or an external force. In the cholesteric liquid crystal layer, optical properties of the cholesteric liquid crystalline phase may be maintained in the layer, and the liquid crystal compound in the layer may not exhibit liquid crystal properties. For example, the polarizable liquid crystal compound may have high molecular weight due to a curing reaction and lose liquid crystal properties.

A center wavelength $\lambda$ of selective reflection of the cholesteric liquid crystal layer depends on a pitch P (= period of helix) of a helix structure of the cholesteric phase and satisfies a relationship of $\lambda = n \times P$, with an average refractive index n of the cholesteric liquid crystal layer. In the specification, the center wavelength $\lambda$ of selective reflection of the cholesteric liquid crystal layer means a wavelength at the center of gravity of reflection peak of circularly polarized light reflection spectra measured in a normal direction of the cholesteric liquid crystal layer. As shown in the expression, the center wavelength of the selective reflection can be adjusted by adjusting the pitch of the helix structure. The pitch depends on the type of chiral agents used together with the polarizable liquid crystal compound and the addition concentration thereof, and thus, a desired pitch can be obtained by adjusting these.

In the cholesteric liquid crystal layer included in the windshield glass of the invention, the center wavelength $\lambda$ may be adjusted by adjusting the n value and the P value. The cholesteric liquid crystal layer can contribute to the display of a projected image having excellent light use efficiency and high and clear brightness, by adjusting the center wavelength $\lambda$ in accordance with the wavelength of projected light to be reflected by the projected image display portion and an angle of incidence of the assumed projected light. It is possible to display a clear colored projected image having excellent light use efficiency by particularly adjusting the center wavelengths of selective reflection of the plurality of cholesteric liquid crystal layers respectively in accordance with an emission wavelength region of a light source used for projection.

In a case of using the windshield glass of the invention in the head-up display system, in order to decrease the reflectivity on a surface of the projected image display portion of the windshield glass on the incidence side of the projected light, it is preferable that the windshield glass is used so that light is incident to the surface described above obliquely. In this case, light is incident to cholesteric liquid crystal layer obliquely, and at this time, the center wavelength of the selective reflection of the cholesteric liquid crystal layer is shifted to a shorter wavelength side. Accordingly, it is preferable that the value of n × P is adjusted so that the wavelength $\lambda$ calculated based on the expression of $\lambda = n \times P$ becomes a longer wavelength than the wavelength of the selective reflection necessary for display of the projected image. When a center wavelength of selective reflection when a ray of light passes at an angle of $\theta_2$ with respect to a normal direction of the cholesteric liquid crystal layer (a helix axis direction of the cholesteric liquid crystal layer) in the cholesteric liquid crystal layer having a refractive index $n_2$ is set as $\lambda_d$, the $\lambda_d$ is represented by the following expression.

$$\lambda_d = n_2 \times P \times \cos\theta_2$$

In the specification, the center wavelength ($\lambda_d$ described above) of selective reflection at a transmitting angle of the projected light on the cholesteric liquid crystal layer may be set as the center wavelength of selective reflection from the appearance.

For example, light incident at an angle of 45° to 70° with respect to the normal line of the surface of the windshield glass in the air of a refractive index of 1, may be transmitted at an angle of 26° to 36° in the cholesteric liquid crystal layer having a refractive index of approximately 1.55. The center wavelength $\lambda_d$ of selective reflection acquired with the angle described above may be inserted into the expression described above, and the value of n × P may be adjusted.

It is preferable that the half-mirror film also includes a cholesteric liquid crystal layer having the center wavelength of selective reflection from the appearance respectively in a red light wavelength region, a green light wavelength region, and a blue light wavelength region. This is because a full-colored projected image can be displayed. The red light wavelength region may be 580 nm to 700 nm, the green light wavelength region may be 500 nm to 580 nm, and the blue light wavelength region may be 400 nm to 500 nm. It is preferable that the half-mirror film includes, for example, a cholesteric liquid crystal layer having the center wavelength of selective reflection from the appearance at 400 nm to 500 nm, preferably at 420 nm to 480 nm, a cholesteric liquid crystal layer having the center wavelength of selective reflection from the appearance at 500 nm to 580 nm, preferably at 510 nm to 570 nm, and a cholesteric liquid crystal layer having the center wavelength of selective reflection from the appearance at 580 nm to 700 nm, preferably 600 nm to 680 nm.

It is preferable that the half-mirror film includes a cholesteric liquid crystal layer having the center wavelength of selective reflection at 490 nm to 600 nm, preferably at 500 nm to 570 nm, and a cholesteric liquid crystal layer having the center wavelength of selective reflection at 600 nm to 680 nm, preferably at 610 nm to 670 nm, and a cholesteric liquid crystal layer having the center wavelength of selective reflection at 680 nm to 850 nm, preferably 700 nm to 830 nm, as the center wavelength of selective reflection when measured in the normal direction of the cholesteric liquid crystal layer. These values are values of $n_2 \times P$ obtained by assuming $\theta_2$ of the expression $\lambda_d = n_2 \times P \times \cos\theta_2$ as 26° to 36° and inserting the values of $\lambda_d$ which allows applying of blue light, green light, and red light, respectively to the projected image.

As each cholesteric liquid crystal layer, a cholesteric liquid crystal layer in which the sense of helix is right or left is used. The sense of the reflected circularly polarized light of the cholesteric liquid crystal layer coincides with the sense of helix. All of the senses of helixes of the cholesteric liquid crystal layers having different center wavelengths of selective reflection may be the same as each other or different from each other, but it is preferable that all of the senses of helixes of the cholesteric liquid crystal layers are the same as each other.

When the cholesteric liquid crystal layers having the same period P and the same sense of helix are laminated, it is possible to increase the circularly polarized light selectivity at a specific wavelength.

As a measurement method of the sense or the pitch of the helix, methods disclosed in "Liquid Crystal Chemistry Experiment Introduction" edited by The Japanese Liquid Crystal Society, published by Sigma Publication 2007, pp. 46, and "Handbook of liquid crystals Editorial Committee of Handbook of liquid crystals, Maruzen, pp. 196 may be used.

A half width $\Delta\lambda$ (nm) of a selective reflection band indicating the selective reflection depends on the birefringence $\Delta n$ of the liquid crystal compound and the pitch P satisfies a relationship of $\Delta\lambda = \Delta n \times P$. Accordingly, the width of the selective reflection band can be controlled by adjusting the value of $\Delta n$. The value of $\Delta n$ can be adjusted by adjusting the type of the polymerizable liquid crystal compound or a mixing ratio thereof or controlling a temperature at the time of oriented immobilization.

The width of the selective reflection band is generally approximately 15 nm to 100 nm for one type of material in a visible light region, for example. In order to widen the width of the selective reflection band, two or more kinds of cholesteric liquid crystal layers having different center wavelengths of reflected light with the changed pitches P may be laminated. At this time, it is preferable that the cholesteric liquid crystal layers having the same sense of helix are laminated. In addition, in one cholesteric liquid crystal layer, it is also possible to widen the width of the selective reflection band by slowly changing the pitch P with respect to the film thickness direction. The width of the selective reflection band is not particularly limited, and may be a wavelength width of 1 nm, 10 nm, 50 nm, 100 nm, 150 nm, or 200 nm. The width is preferably equal to or smaller than approximately 100 nm.

(Laminating Order of Plurality of Cholesteric Liquid Crystal Layers having Different Center Wavelengths of Selective Reflection)

In a case where the half-mirror film (which does not include a retardation layer which will be described later) of the windshield glass of the invention includes two or more cholesteric liquid crystal layers in which the center wavelengths of selective reflection are different from each other, it is preferable that the cholesteric liquid crystal layer closest to the incidence side of the projected light is disposed so as to have the longest center wavelength of selective reflection. The inventors found that generation of a double image can be further reduced with such a configuration.

The reason for the reduction of the generation of a double image is assumed as follows by the inventors. In order to reduce generation of a double image, it is necessary to reduce the reflection on a glass interface on the incidence side of the projected light and the other side when seen from the half-mirror film. Light transmitted through the cholesteric liquid crystal layer is circularly polarized light having the sense opposite to the sense of the circularly polarized light reflected by the cholesteric liquid crystal layer, and the interface reflected light from the rear surface is mostly circularly polarized light having the sense reflected by the cholesteric liquid crystal layer, in a case where the layer on the rear surface side than the cholesteric liquid crystal layer has a low birefringence. Thus, the interface reflected light does not return to the surface on the incidence side of the projected light (observer side) and a double image is hardly generated. However, the cholesteric liquid crystal layer functions as a retardation layer with respect to light at a wavelength other than the wavelength of selective reflection, and accordingly, when circularly polarized light generated by the transmission through the cholesteric liquid crystal layer which is closer to the incidence side of the projected light transmits the other cholesteric liquid crystal layer, the circularly polarized light is scattered, and a component of light returning to the observer side is generated in the light interface-reflected on the rear surface side, and this causes a double image. Here, when the film thickness of the cholesteric liquid crystal layer through which light passes is decreased, in order to decrease an effect of phase difference ($\Delta$nd) of the cholesteric liquid crystal layer, generation of a double image may be reduced. Since the cholesteric liquid crystal layer having the longest center wavelength of selective reflection has a great pitch and the greatest film thickness, the cholesteric liquid crystal layer closest to the incidence side of the projected light is disposed so as to have the longest center wavelength of selective reflection, and accordingly, generation of a double image is prevented.

In a case where the half-mirror film not including a retardation layer includes cholesteric liquid crystal layers having the center wavelengths of selective reflection from the appearance respectively with respect to red light, green light, and blue light, the cholesteric liquid crystal layer closest to the incidence side of the projected light may be a cholesteric liquid crystal layer having the center wavelength of selective reflection from the appearance with respect to red light. The order of the other two layers is not particularly limited. From the incidence side of the projected light, the layers may be disposed in the order of the cholesteric liquid crystal layer having the center wavelength of selective reflection from the appearance with respect to red light, the cholesteric liquid crystal layer having the center wavelength of selective reflection from the appearance with respect to green light, and the cholesteric liquid crystal layer having the center wavelength of selective reflection from the appearance with respect to blue light, or the layers may be disposed in the order of the cholesteric liquid crystal layer having the center wavelength of selective reflection from the appearance with respect to red light, the cholesteric liquid crystal layer having the center wavelength of selective reflection from the appearance with respect to blue light, and the cholesteric liquid crystal layer having the center wavelength of selective reflection from the appearance with respect to green light.

In a case where the half-mirror film including a retardation layer includes cholesteric liquid crystal layers having the center wavelengths of selective reflection from the appearance respectively with respect to red light, green light, and blue light, the layers are preferably disposed in the order of the cholesteric liquid crystal layer having a center wavelength of selective reflection from the appearance with respect to blue light, the cholesteric liquid crystal layer having a center wavelength of selective reflection from the appearance with respect to green light, and the cholesteric liquid crystal layer having a center wavelength of selective reflection from the appearance with respect to red light, from the retardation layer side.

The film thickness of the cholesteric liquid crystal layer may be a film thickness which satisfies the number of pitches capable of achieving sufficient selective reflection. The film thickness thereof may be, for example, 1 $\mu$m to 20 $\mu$m and is preferably 2 $\mu$m to 10 $\mu$m. Particularly, the film thickness of the cholesteric liquid crystal layers having the center wavelengths of selective reflection from the appearance respectively with respect to red light is preferably 3 $\mu$m to 10 $\mu$m and more preferably 4 $\mu$m to 8 $\mu$m. The film thickness of the cholesteric liquid crystal layers having the center wavelengths of selective reflection from the appearance respectively with respect to green light is preferably 2.5 $\mu$m to

8 μm and more preferably 3 μm to 7 μm. The film thickness of the cholesteric liquid crystal layers having the center wavelengths of selective reflection from the appearance respectively with respect to blue light is preferably 2 μm to 6 μm and more preferably 2 μm to 5 μm. Particularly, in the half-mirror film not including the retardation layer, the layer farther from the incidence side of the projected light preferably has a small film thickness.

(Manufacturing Method of Cholesteric Liquid Crystal Layer)

Hereinafter, manufacturing materials and a manufacturing method of the cholesteric liquid crystal layer will be described.

As a material used for formation of the cholesteric liquid crystal layer, a liquid crystal composition including a polymerizable liquid crystal compound and a chiral agent (optically active compound) is used. The liquid crystal composition obtained by further mixing a surfactant or a polymerization initiator, if necessary, and dissolving in a solvent, is applied to a support, an orientation film, and a cholesteric liquid crystal layer which is an underlayer, causing cholesteric orientation and maturing, performing solidification by curing the liquid crystal composition, and thus, a cholesteric liquid crystal layer can be formed.

(Polymerizable Liquid Crystal Compound)

The polymerizable liquid crystal compound may be a rod-shaped liquid crystal compound or a disk-shaped liquid crystal compound, and a rod-shaped liquid crystal compound is preferable.

As an example of the rod-shaped liquid crystal compound for forming the cholesteric liquid crystal layer, a rod-shaped nematic liquid crystal compound is used. As the rod-shaped nematic liquid crystal compound, azomethines, azoxys, cyanobiphenyls, cyanophenyls, benzoic acid esters, cyclohexane carboxylic acid phenyl esters, cyanophenylcyclohexanes, cyano-substituted phenylpyrimidines, alkoxy-substituted phenylpyrimidines, phenyl dioxanes, tolans, and alkenyl cyclohexyl benzonitriles are preferably used. Not only a low-molecular liquid crystal compound, but also a high-molecular liquid crystal compound can be used.

The polymerizable liquid crystal compound is obtained by introducing a polymerizable group to a liquid crystal compound. The example of a polymerizable group include an unsaturated polymerizable group, an epoxy group, an aziridinyl group, and an unsaturated polymerizable group is preferable, and an ethylenically unsaturated polymerizable group is particularly preferable. The polymerizable group can be introduced into molecules of the liquid crystal compound by various methods. The number of polymerizable groups of the polymerizable liquid crystal compound is preferably 1 to 6 and more preferably 1 to 3. Examples of the polymerizable liquid crystal compound include compounds disclosed in Makromol. Chem., vol. 190, pp. 2255 (1989), Advanced Material, vol. 5, pp. 107 (1993), US4683327A, US5622648A, US5770107A, WO95/22586A, WO95/24455A, WO97/00600A, WO98/23580A, WO98/52905, JP1989-272551A (JP-H01-272551A), JP1994-16616A (JP-H06-16616A), JP1995-110469A (JP-H07-110469A), JP1999-80081A (JP-H11-80081A), and JP2001-328973A. Two or more kinds of polymerizable liquid crystal compounds may be used in combination. When two or more kinds of polymerizable liquid crystal compounds are used in combination, an orientation temperature can be decreased.

The amount of polymerizable liquid crystal compositionadded into the liquid crystal composition is preferably 80 to 99.9% by mass, more preferably 85 to 99.5% by mass, and particularly preferably 90 to 99% by mass with respect to the mass of solid contents (mass excluding solvent) of the liquid crystal composition.

In the windshield glass not including the retardation layer, the cholesteric liquid crystal layer farther from the incidence side of the projected light is preferably formed by using a composition including a liquid crystal compound having a low birefringence. This is because, as the value of Δn of the liquid crystal compound is small, the effect of the phase difference received by the circularly polarized light incident to the cholesteric liquid crystal layer is decreased, and a double image is hardly generated. Meanwhile, the birefringence of the liquid crystal compound for forming the cholesteric liquid crystal layer closest to the incidence side of the projected light is not particularly limited. As the liquid crystal compound having a low birefringence, a liquid crystal compound having the Δn equal to or smaller than 0.10, preferably equal to or smaller than 0.08 may be used.

(Chiral Agent: Optically Active Compound)

The chiral agent has a function of inducing a helix structure of a cholesteric liquid crystalline phase. Since the sense of the helix or the helix pitch induced is different depending on the compounds, the chiral compound may be selected according to the purpose.

The chiral agent is not particularly limited, and a well-known compound (for example, handbook of liquid crystal device, vol. 3, part 4-3, chiral agents for TN and STN, pp. 199, The Japan Society for the Promotion of Science, Committee 142, 1989), isosorbide, and an isomannide derivative can be used.

The chiral agent normally includes asymmetric carbon atoms, but an axially asymmetric compound or a plane asymmetric compound not including asymmetric carbon atoms can also be used. Examples of an axially asymmetric compound or a plane asymmetric compound include binaphthyl, helicene, paracyclophane, and derivatives thereof. The chiral agent may include a polymerizable group. In a case where both the chiral agent and the liquid crystal compound include a polymerizable group, a polymer having a repeating unit derived from the polymerizable liquid crystal compound and a repeating unit derived from the chiral agent can be formed with a polymerization reaction between the polymerizable chiral agent and the polymerizable liquid crystal compound. In this aspect, the polymerizable group of the polymerizable chiral agent is preferably the same group as the polymerizable group of the polymerizable liquid crystal compound. Accordingly, examples of a polymerizable group of the chiral agent include an unsaturated polymerizable group, an epoxy group, and an aziridinyl group, an unsaturated polymerizable group is preferable, and an ethylenically unsaturated polymerizable group is particularly preferable.

In addition, the chiral agent may be a liquid crystal compound.

The content of the chiral agent in the liquid crystal compound is preferably 0.01 mol% to 200 mol% and more preferably 1 mol% to 30 mol% with respect to the amount of the liquid crystal composition.

(Polymerization Initiator)

The liquid crystal composition preferably includes a polymerization initiator. In an aspect of allowing a polymerization reaction with ultraviolet light irradiation, the polymerization initiator used is preferably a photopolymerization initiator capable of starting a polymerization reaction with ultraviolet light irradiation. Examples of the photopolymerization initiator include $\alpha$-carbonyl compound (disclosed in US2367661A and US2367670A), acyloin ether (disclosed in US2448828A), an $\alpha$-hydrocarbon substituted aromatic acyloin compound (disclosed in US2722512A), a polynuclear quinone compound (disclosed in US3046127A and US2951758A), a combination of triaryl imidazole dimer and p-aminophenyl ketone (disclosed in US3549367A), acridine and phenazine compound (disclosed in JP1985-105667A (JP-S60-105667A), and US4239850A), and an oxadiazole compound (disclosed in US4212970).

The content of the photopolymerization initiator in the liquid crystal composition is preferably 0.1 to 20% by mass and more preferably 0.5 to 5% by mass with respect to the content of the polymerizable liquid crystal compound.

(Crosslinking Agent)

The liquid crystal composition may arbitrarily include a crosslinking agent, in order to improve the film strength and durability after curing. As the crosslinking agent, a component which is cured with ultraviolet light, heat, or moisture can be suitably used.

The crosslinking agent is not particularly limited, and can be suitably selected according to the purpose. Examples thereof include a multifunctional acrylate compound such as trimethylolpropane tri(meth)acrylate, or pentaerythritol tri(meth)acrylate; an epoxy compound such as glycidyl (meth)acrylate, or ethylene glycol diglycidyl ether; an aziridine compound such as 2,2-bishydroxymethylbutanol-tris [3- (1-aziridinyl) propionate], or 4,4-bis(ethyleneiminocarbonylamino) diphenylmethane; an isocyanate compound such as hexamethylene diisocyanate or biuret type isocyanate; a polyoxazoline compound including an oxazoline group in a side chain; an alkoxysilane compound such as vinyltrimethoxysilane or N- (2-aminoethyl) 3-aminopropyltrimethoxysilane. In addition, a well-known catalyst can be used in accordance with reactivity of the crosslinking agent, and it is possible to improve the productivity, in addition to the improvement of the film strength and durability. These may be used singly or in combination of two or more kinds thereof.

The content of the crosslinking agent is preferably 3% by mass to 20% by mass and more preferably 5% by mass to 15% by mass. When the content of the crosslinking agent is smaller than 3% by mass, an effect of improving the crosslinking density may not be obtained, and when the content of the crosslinking agent is greater than 20% by mass, the stability of the cholesteric liquid crystal layer may be decreased.

(Orientation Controlling Agent)

An orientation controlling agent which contributes to stably or rapidly setting the cholesteric liquid crystal layer as a cholesteric liquid crystal layer having planar orientation, may be added into the liquid crystal composition. Examples of the orientation controlling agent include a fluorine (meth)acrylate-based polymer disclosed in paragraphs [0018] to [0043] of JP2007-272185A and a compound represented by Expressions (I) to (IV) disclosed in paragraphs [0031] to [0034] of JP2012-203237.

The orientation controlling agent may be used singly or in combination of two or more kinds thereof.

The amount of orientation controlling agent added into the liquid crystal compositionis preferably 0.01% by mass to 10% by mass, more preferably 0.01% by mass to 5% by mass, and particularly preferably 0.02% by mass to 1% by mass, with respect to the total mass of the polymerizable liquid crystal compound.

(Other Additives)

In addition, the liquid crystal composition may include at least one kind selected from various additives such as a surfactant for adjusting the surface tension of a coated film and setting an even film thickness, a polymerizable monomer, and the like. Further, a polymerization inhibitor, an antioxidant, an ultraviolet absorber, a light stabilizer, a coloring material, and metal oxide fine particles may be further added into the liquid crystal composition, if necessary, in a range not deteriorating the optical performance.

Regarding the cholesteric liquid crystal layer, a cholesteric liquid crystal layer having fixed cholesteric regularity can be formed by applying a liquid crystal composition obtained by dissolving a polymerizable liquid crystal compound, a polymerization initiator, and if necessary, a chiral agent, and a surfactant in a solvent, onto a support, an orientation layer, or a cholesteric liquid crystal layer which is manufactured in advance, drying the liquid crystal compound to obtain a coated film, and irradiating this coated film with active light to allow polymerization of the cholesteric liquid crystal composition. In addition, a laminated film formed of the plurality of cholesteric liquid crystal layers can be formed by repeatedly performing the manufacturing step of the cholesteric liquid crystal layer.

(Solvent)

A solvent used for preparing the liquid crystal composition is not particularly limited, and is suitably selected according to the purpose, and an organic solvent is preferably used.

The organic solvent is not particularly limited, and is suitably selected according to the purpose, and examples thereof include ketones, alkyl halides, amides, sulfoxides, heterocyclic compounds, hydrocarbons, esters, and ethers. These may be used singly and in combination of two or more kinds thereof. Among these, ketones are particularly preferable, in a case of considering the load on the environment.

(Coating, Orientation, Polymerization)

A method of applying the liquid crystal composition to a support, an orientation film, and a cholesteric liquid crystal layer which is an underlayer is not particularly limited, and can be suitably selected according to the purpose, and examples thereof include a wire bar coating method, a curtain coating method, an extrusion coating method, a direct gravure coating method, a reverse gravure coating method, a die coating method, a spin coating method, a dip coating method, a spray coating method, and a slide coating method. In addition, the method can also be performed by transferring the liquid crystal compositionwhich is separately applied onto a support. Liquid crystal molecules are oriented by heating the coated liquid crystal composition. A heating temperature is preferably equal to or lower than 200°C and more preferably equal to or lower than 130°C. By this orientation treatment, an optical thin film in which the polymerizable liquid crystal compound is twist-oriented so as to have a helix axis in a direction substantially perpendicular to a film surface is obtained.

The oriented liquid crystal compound is further polymerized and the liquid crystal composition can be cured. The polymerization may be any of thermal polymerization and photopolymerization using light irradiation, and photopolymerization is preferable. The light irradiation is preferably performed by using ultraviolet light. An irradiation energy is preferably 20 mJ/cm$^2$ to 50 J/cm$^2$ and more preferably 100 mJ/cm$^2$ to 1,500 mJ/cm$^2$. In order to promote a photopolymerization reaction, the light irradiation may be performed under the heating conditions or the nitrogen atmosphere. An irradiation ultraviolet light wavelength is preferably 350 nm to 430 nm. A high polymerization reaction rate is preferable, and a reaction rate is preferably equal to or greater than 70% and more preferably equal to or greater than 80%, from a viewpoint of stability. Regarding the polymerization reaction rate, a ratio of consumption of a polymerizable functional group can be determined by using IR absorption spectra.

(Laminating Plurality of Cholesteric Liquid Crystal Layers)

When laminating the plurality of cholesteric liquid crystal layers, a cholesteric liquid crystal layer which is separately manufactured may be laminated by using an adhesive and the like, or a step of directly applying a liquid crystal composition including a polymerizable liquid crystal compound and the like to the surface of a cholesteric liquid crystal layer which is formed in advance by a method which will be described later, and allowing the orientation and fixing may be repeatedly performed, and the latter method is preferable. This is because, when a subsequent cholesteric liquid crystal layer is directly applied to the surface of a cholesteric liquid crystal layer formed in advance, an orientation direction of liquid crystal molecules on an air interface side of the cholesteric liquid crystal layer formed in advance and an orientation direction of liquid crystal molecules on a lower side of the cholesteric liquid crystal layer formed thereon coincide with each other, and excellent polarization properties of the laminate of the cholesteric liquid crystal layers are obtained. In addition, normally, when an adhesive layer provided to have a film thickness of 0.5 to 10 μm is used, an

interference unevenness derived from the thickness unevenness of the adhesive layer may be observed, and thus, it is preferable that laminating is performed without using the adhesive layer.

[Retardation Layer]

The half-mirror film may include a retardation layer. For example, when a λ/2 retardation layer is used as a retardation layer in combination with the cholesteric liquid crystal layer, it is possible to display a clearer projected image.

A front phase difference of the λ/2 retardation layer may be a length of 1/2 of a visible light wavelength region or "1/2 of the center wavelength × n ± center wavelength" (n is an integer). Particularly, the front phase difference may be a reflection wavelength of any cholesteric liquid crystal layer or a length of 1/2 of the center wavelength of an emission wavelength of a light source. The front phase difference may be, for example, a phase difference in a range of 190 nm to 390 nm and is preferably a phase difference in a range of 200 nm to 350 nm.

The λ/2 retardation layer is not particularly limited, and can be suitably selected according to the purpose, and examples thereof include a stretched polycarbonate film, a stretched norbornene-based polymer film, a transparent film in which inorganic particles having birefringence such as strontium carbonate are included and oriented, a film in which the liquid crystal compound is uniaxially oriented and orient-fixed, a thin film in which oblique deposition of an inorganic dielectric is performed on a support, and the like.

The thickness of the λ/2 retardation layer is preferably 0.2 μm to 300 μm, more preferably 0.5 μm to 150 μm, and even more preferably 1 μm to 80 μm.

In the windshield glass, the λ/2 retardation layer is preferably disposed so that the λ/2 retardation layer and (all of) the cholesteric liquid crystal layers are disposed in this order, from the side which is the incidence side of the projected light (generally, an inner side of a vehicle), when the windshield glass is used in a vehicle.

The slow axis direction of the λ/2 retardation layer is preferably determined in accordance with the direction of incidence of projected light for displaying a projected image and the sense of a helix of the cholesteric liquid crystal layer, when the windshield glass is used in the head-up display system. For example, in a case where the projected light is incident to the side of the λ/2 retardation layer with respect to the cholesteric liquid crystal layer which is downwards (vertically downwards) of a projected image display member, the slow axis of the λ/2 retardation layer with respect to an upper vertical direction at the time of using the projected image display member is preferably in a range of +40° to +65° or in a range of -40° to -65°. In addition, the slow axis direction is preferably set as follows, in accordance with the sense of the helix of the cholesteric liquid crystal layer. In a case where the sense is right (preferably, in a case where the sense of all of the cholesteric liquid crystal layers is right), the slow axis of the λ/2 retardation layer with respect to the upper vertical direction of the windshield glass is preferably in a range of +40° to +65° or in a range of -45° to -60° clockwise when seen from the incidence side of the projected light. In a case where the sense is left (preferably, in a case where the sense of all of the cholesteric liquid crystal layers is left), the slow axis of the λ/2 retardation layer with respect to the upper vertical direction of the windshield glass is preferably in a range of +40° to +65° or in a range of -45° to -60° anticlockwise when seen from the incidence side of the projected light.

[Other layers]

The half-mirror film may include layers other than the cholesteric liquid crystal layer and the retardation layer. All of the other layers are preferably transparent in the visible light region. In the specification, the expression "being transparent in a visible light region" means that the transmittance of visible light is equal to or greater than 70%.

In addition, all of the other layers preferably have a low birefringence. In the specification, the expression "low birefringence" means that the front phase difference in a wavelength region in which the half-mirror film shows reflection is equal to or smaller than 10 nm, and the front phase difference is preferably equal to or smaller than 5 nm. In addition, all of the other layers preferably have a small difference in a refractive index from an average refractive index (in-plane average refractive index) of the cholesteric liquid crystal layer. Examples of the other layers include a support, an orientation layer, and an adhesive layer.

(Support)

The half-mirror film may include a support which becomes a substrate when forming the cholesteric liquid crystal layer or the retardation layer. The support may serve as the retardation layer.

The support is not particularly limited. The support used for forming the cholesteric liquid crystal layer or the retardation layer may be a temporary support which is peeled off after forming the cholesteric liquid crystal layer, and may not be included in the half-mirror film. Examples of the support include plastic films of polyester such as polyethylene terephthalate (PET), polycarbonate, an acrylic resin, an epoxy resin, polyurethane, polyamide, polyolefin, cellulose derivative, and silicone. As the temporary support, glass may be used in addition to the plastic films.

A film thickness of the support may be approximately 5 $\mu$m to 1,000 $\mu$m, is preferably 10 $\mu$m to 250 $\mu$m and more preferably 15 $\mu$m to 90 $\mu$m.

(Orientation Layer)

The half-mirror film may include an orientation layer as an underlayer onto which the liquid crystal composition is applied when forming the cholesteric liquid crystal layer or the retardation layer.

The orientation layer may be provided by methods such as a rubbing treatmentof an organic compound (resin such as polyimide, polyvinyl alcohol, polyester, polyallylate, polyamideimide, polyetherimide, polyamide, and modified polyamide) such as a polymer, oblique vapor deposition of an inorganic compound, formation of a layer having a microgroove, or accumulation of an organic compound (for example, $\omega$-tricosanoic acid, dioctadecyl methyl ammonium chloride, and methyl stearate) by using a Langmuir-Blodgett technique (LB film). In addition, an orientation layer exhibiting an orientation function by applying an electric field, applying a magnetic field, or light irradiation may be used.

Particularly, an orientation layer formed of a polymer is preferably subjected to the rubbing treatment, and the liquid crystal composition is preferably applied onto the surface subjected to the rubbing treatment. The rubbing treatment can be performed by rubbing a surface of a polymer layer in a constant direction with paper or cloth several times.

The liquid crystal composition may be applied to the surface of the support or the surface of the support which is subjected to the rubbing treatment, without providing the orientation layer.

In a case of forming a liquid crystal layer by using the temporary support, the orientation film may be peeled off with the temporary support and may not be a layer configuring the half-mirror film.

A thickness of the orientation layer is preferably 0.01 to 5 $\mu$m and more preferably 0.05 to 2 $\mu$m.

(Adhesive Layer)

The half-mirror film may include an adhesive layer for bonding each layer. The adhesive layer, for example, may be provided between the cholesteric liquid crystal layers or between the cholesteric liquid crystal layer and other layers. In addition, the adhesive layer may be also provided between the half-mirror film and the intermediate film sheet and between the half-mirror film and the glass plate.

The adhesive layer may be formed of an adhesive.

From a viewpoint of a curing method, the adhesive includes a hot melt type adhesive, a thermosetting adhesive, a photocuring adhesive, a reaction curing type adhesive, and pressure-sensitive type adhesive which does not need curing. As materials, acrylate-based, urethane-based, urethane acrylate-based, epoxy-based, epoxy acrylate-based, polyolefin-based, modified olefin-based, polypropylene-based, ethylene vinyl alcohol-based, vinyl chloride-based, chloroprene rubber-based, cyanoacrylate-based, polyamide-based, polyimide-based, polystyrene-based, polyvinylbutyral-based compounds can be used. From viewpoints of workability and productivity, a photocuring method is preferable as a curing method, and from viewpoints of optical transparency and heat resistance, the acrylate-based, urethane acrylate-based, and epoxy acrylate-based compounds are preferably used as the material.

An optically clear adhesive tape (OCA tape) may be used in order to bond the half-mirror film and the glass plate to each other.

A film thickness of the adhesive layer is 0.5 to 10 $\mu$m and is preferably 1 to 5 $\mu$m. The adhesive layer is preferably provided to have an even film thickness, in order to reduce the color unevenness and the like of the half-mirror film.

[Laminated Glass]

As described above, the laminated glass has a structure in which two glass plates are bonded to each other with an intermediate layer interposed therebetween. The laminated glass can be manufactured by using a well-known manufacturing method of the laminated glass. In general, the laminated glass can be manufactured by a method of interposing the intermediate film sheet for laminated glass between two glass plates, repeating a heating process and a pressurizing process (process using a rubber roller and the like) several times, and finally performing the heating process under a pressurized condition by using an autoclave.

As the glass plate, a glass plate which is generally used in the windshield glass can be used. The glass plate may be transparent in a visible light region and have a low birefringence.

A thickness of the glass plate is not particularly limited, and may be approximately 0.5 mm to 5 mm and is preferably 1 mm to 3 mm and more preferably 2.0 to 2.3 mm.

The laminated glass includes the intermediate layer having awedge-shaped cross section. Along with such an intermediate layer, the laminated glass also has awedge-shaped cross section. In addition, particularly, along with the intermediate layer having awedge-shaped cross section, the film thickness of the intermediate layer on the upper end of the projected image display portion is preferably greater than the film thickness of the intermediate layer on the lower end of the projected image display portion. With such a structure, it is possible to further reduce generation of a double image.

As will be described later, the intermediate layer having awedge-shaped cross section can be manufactured by manufacturing a sheet so that the film thickness of one side of a rectangular sheet and the film thickness of a side opposite to the one side are different from each other, when manufacturing the intermediate film sheet or a laminated intermediate film sheet for laminated glass. For example, a difference of film thickness of the sides (preferably upper and lower sides) of the sheet, which oppose each other by a distance of 500 mm to 1,000 mm, is approximately 0.5 mm to 2.0 mm and may be preferably 0.6 mm to 1.0 mm. Specifically, the sheet may be manufactured in reference to the descriptions disclosed in JP2011-505330A, US5013134A, or paragraphs 0047 to 0050 of JP2008-201667. When performing the outer sticking of the half-mirror film, commercially available laminated glass having awedge-shaped cross section may be used.

(Intermediate Film Sheet)

Any well-known intermediate film sheet may be used as the intermediate film sheet in a case of using the intermediate film sheet not including the half-mirror film. For example, a resin film including a resin selected from the group consisting of polyvinylbutyral (PVB), an ethylene-vinyl acetate copolymer, and a chlorine-containing resin can be used. The resin is preferably a main component of the intermediate film sheet. The main component means a component occupying the intermediate film sheet with the content equal to or greater than 50% by mass.

Among the resins, polyvinylbutyral or an ethylene-vinyl acetate copolymer is preferable, and polyvinylbutyral is more preferable. The resin is preferably a synthesis resin.

Polyvinylbutyral can be obtained by acetalizing polyvinyl alcohol with butyraldehyde. A preferable lower limit of the degree of acetalizing of the polyvinylbutyral is 40%, a preferable upper limit thereof is 85%, a more preferable lower limit thereof is 60%, and a more preferable upper limit is 75%.

The polyvinylbutyral can be prepared by acetalizing polyvinyl alcohol with butyraldehyde. The polyvinyl alcohol is normally obtained by saponification of polyvinyl acetate, and polyvinyl alcohol having a degree of saponification of 80 to 99.8 mol% is generally used.

In addition, a preferable lower limit of the degree of polymerization of the polyvinyl alcohol is 200 and a preferable upper limit thereof is 3,000. When the degree of polymerization of the polyvinyl alcohol is smaller than 200, penetration resistance of the laminated glass obtained is deteriorated, and when the degree of polymerization of the polyvinyl alcohol is greater than 3,000, formability of a resin film is deteriorated, rigidity of the resin film is excessively increased, and workability is deteriorated. A more preferable lower limit thereof is 500 and a more preferable upper limit is 2,000.

(Laminated Intermediate Film Sheet for Laminated Glass)

The laminated intermediate film sheet for laminated glass including the half-mirror film can be formed by bonding the half-mirror film to the surface of the intermediate film sheet. Alternatively, the laminated intermediate film sheet for the laminated glass can also be formed by interposing the half-mirror film between the two intermediate film sheets. The two intermediate film sheets may be the same as each other or different from each other, and the same intermediate film sheets are preferable.

A well-known bonding method can be used in the bonding of the half-mirror film and the intermediate film sheet to each other, and laminate treatment is preferably used. In a case of performing the laminate treatment, it is preferable that the laminate treatment is performed under heated and pressurized conditions to some extent, so that the laminate and the intermediate film sheet are not peeled off from each other after the process.

In order to stably perform the laminating, a film surface temperature of a side of the intermediate film sheet to be bonded is preferably 50°C to 130°C and more preferably 70°C to 100°C.

The pressurization is preferably performed at the time of laminating. The pressurization condition is preferably lower than 2.0 kg/cm$^2$, more preferably in a range of 0.5 to 1.8 kg/cm$^2$, and even more preferably 0.5 to 1.5 kg/cm$^2$.

In addition, the support which may be included in the half-mirror film may be peeled off, at the same time as the laminating, immediately after the laminating, or immediately before the laminating. That is, the support may not be included in the laminated intermediate film sheet obtained after the laminating. As an example of a manufacturing method of the laminated intermediate film sheet for laminated glass, a manufacturing method of a laminated intermediate film sheet for laminated glass, the method including: (1) a first step of bonding a half-mirror film to the surface of a first intermediate film sheet to obtain a first laminate; and (2) a second step of bonding a second intermediate film sheet to the surface of the half-mirror film in the first laminate, opposite to the surface to which the first intermediate sheet is bonded, in which, in the first step, an infrared reflecting plate and the first intermediate film sheet are bonded to each other and the support is peeled off, and in the second step, the second intermediate film sheet is bonded to the surface from which a substrate is peeled off, is used.

By this method, it is possible to manufacture a laminated intermediate film sheet for laminated glass not including a support, and it is possible to easily manufacture laminated glass not including a support, by using the laminated intermediate film sheet for laminated glass.

[Layer on Visible Side with respect to Cholesteric Liquid Crystal Layer]

A problem regarding a double image (or a multiple image) occurs due to the superimposition of an image formed by reflected light from a layer reflecting the projected light and an image formed by the interface reflected light from the front surface or rear surface of the projected image display member, when seen from the light incidence side, in the projected image display member. In the windshield glass of the invention, light transmitted through the cholesteric liquid crystal layer is a circularly polarized light having a sense opposite to the sense of the circularly polarized light reflected by the cholesteric liquid crystal layer, and the interface reflected light from the rear surface is mostly circularly polarized light having a sense reflected by the cholesteric liquid crystal layer, in a case where the layer on the rear surface side with respect to the cholesteric liquid crystal layer is a glass plate having a low birefringence. Thus, a double image is hardly generated. In addition, as described above, in a configuration of including the plurality of cholesteric liquid crystal layers, when the cholesteric liquid crystal layer closest to the incidence side of the projected light has the longest center wavelength of selective reflection, the circularly polarized light at a specific wavelength generated by being transmitted through the cholesteric liquid crystal layer is prevented from being affected by the phase difference of the other cholesteric liquid crystal layer, and generation of a double image can be reduced. Further, by using polarized light as the projected light and suitably providing the retardation layer, it is also possible to allow most of the projected light to be reflected by the half-mirror film.

Meanwhile, the reflected light from the incidence side of the projected light may generate a significant double image. Particularly, when the distance between the center of gravity of the cholesteric liquid crystal layer and a front surface when seen from the light incidence side of the projected image display member is equal to or greater than a certain value, a double image is significantly generated. Specifically, in the structure of the windshield glass of the invention, when the total thickness (not including the thickness of the cholesteric liquid crystal layer) of the layers on the observer side with respect to the cholesteric liquid crystal layer, that is, when the distance between an outermost surface on the incidence side of the projected light of the cholesteric liquid crystal layer which is closest to the incidence side of the projected light and an outermost surface of the windshield glass on the incidence side of the projected light with respect to the cholesteric liquid crystal layer is equal to or greater than 0.5 mm, a double image may be significantly generated, when the total thickness is equal to or greater than 1 mm, a double image may be more significantly generated, when the total thickness is equal to or greater than 1.5 mm, a double image may be even more significantly generated, and when the total thickness is equal to or greater than 2.0 mm, a double image may be particularly significantly generated. As the layer on the visible side with respect to the cholesteric liquid crystal layer, a base material of the retardation layer, the support, the intermediate film sheet, or the second glass plate is used.

The laminated glass including the intermediate layer having awedge-shaped cross section is used in the windshield glass of the invention, and thus, even in a case where the total thicknesses of the layers on the visible side with respect to the cholesteric liquid crystal layer is obtained as described above, it is possible to recognize a projected image without a significant double image.

<Head-Up Display System>

The windshield glass can be used together with a system of emitting a projected image such as a projector, and a projected image can be displayed on the projected light display portion. By using this, the windshield glass of the invention can be used as a constituent member of a head-up display system. In the head-up display system, the windshield glass and a projector which emits projected light may be integrally provided, or the windshield glass and a projector which emits projected light may be used in combination.

The head-up display system is one kind of projected image display systems, and a problem regarding a double image more easily occurs, than other projected image display systems using a projection screen, because the projected image is the virtual image as described above. That is, in a projection screen displaying an actual image, the deviation of reflected light is directly observed in the projected image, but in the head-up display system displaying a virtual image, the deviation of reflected light is projected to be expanded, and therefore, a double image is significantly easily generated. In addition, in the head-up display system, the emission of the projected light in the normal direction of the reflection surface of the windshield glass is difficult due to the form of use, and the projected light is generally incident obliquely at an angle of incidence, and therefore, an optical path length of any of the reflected light from the front surface or the rear surface of the windshield glass and the reflected light from the half-mirror surface is increased, and a double image is easily recognized.

The inventors found that, in the head-up display system in which the projected image is a virtual image as described above, when the windshield glass formed of the wedge-shaped laminated glass and the cholesteric liquid crystal layer are combined with each other, generation of a double image is prevented and brightness of the projected image is significantly improved.

The projected light (incident light) when displaying a projected image may be polarized light or may be natural light containing p-polarized light and s-polarized light. It is also preferable that the projected light (incident light) when displaying a projected image is p-polarized light. In a case where the projected light (incident light) is p-polarized light, it is preferable that the projected light is incident at an oblique angle of incidence of 45° to 70° with respect to the normal line of the projected image display portion. A Brewster's angle at the interface between the glass having a refractive index of approximately 1.51 and the air having a refractive index of 1 is approximately 56°. When the p-polarized light is incident in the range of this angle, the amount of the interface reflected light from the surface of the windshield glass is smaller than the amount of the selection reflected light from the cholesteric liquid crystal layer for displaying a projected image, and it is possible to perform an image display with a decreased effect of a double image. The angle is also preferably set as 50° to 65°. At this time, the projected image can be observed at an angle of 45° to 70°, preferably 50° to 65°, with respect to the normal line of the windshield glass, in a direction of the reflected light on the plane of incidence.

The projected light may be incident in any direction of upwards, downwards, rightwards, and leftwards of the windshield glass, and may be determined in accordance with the direction of an observer. For example, the projected light may be incident at an oblique angle of incidence from the bottom at the time of use.

In addition, the slow axis of the λ/2 retardation layer in a case of using the λ/2 retardation layer preferably forms an angle of 40° to 65°, preferably 45° to 60°, with respect to a vibration direction (plane of incidence of projected light) of the incident p-polarized light. The projected light is incident from the λ/2 retardation layer side with respect to the cholesteric liquid crystal layer, and may be incident to the cholesteric liquid crystal layer through the λ/2 retardation layer. That is, the retardation layer may be disposed on the incidence side of the projected light with respect to all of the cholesteric liquid crystal layers.

As the head-up display system using the windshield glass as the projected image display member, descriptions disclosed in JP1990-141720A (JP-H02-141720A), JP1998-96874A (JP-H10-96874A), JP2003-98470A, US5013134A, and JP2006-512622A can be referred to.

[Projector]

In the specification, the "projector" is an "apparatus which projects light or an image" and includes an "apparatus which projects a drawn image". In the head-up display system, the projector includes a drawing device, and preferably performs a reflection display of an image (actual image) drawn on a small-sized intermediate image screen as a virtual image, by a combiner.

The drawing device of the projector is not particularly limited, and there is no particular limitation as long as the projector has a function of projecting an image. Examples of the projector include a liquid crystal projector, a digital light processing (DLP) projector using a digital micromirror device (DMD), a grating light valve (GLV) projector, a liquid crystal on silicon (LCOS) projector, and a CRT projector. The DLP projector and the grating light valve (GLV) projector may be projectors using microelectromechanical systems (MEMS).

As a light source of the projector, a laser light source, an LED, or an electric-discharge tube can be used. The projector may include a reflecting mirror which adjusts an optical path of projected light formed by the drawing device.

In the projector used in combination with the windshield glass of the invention, the emitted light may be polarized light and may be natural light containing p-polarized light and s-polarized light. In a case of using the projector which emits natural light containing p-polarized light and s-polarized light, an effect of the improvement of brightness obtained by using the half-mirror film is particularly significantly obtained. As the projector which emits natural light containing p-polarized light and s-polarized light, the DLP projector is preferably used, for example.

In a case of using polarized light and in a case where the light emitted from the projector is not a linearly polarized light, a linearly polarizing film may be disposed and used on the side of the emitted light of the projector, or the light may be set as linearly polarized light on an optical path between the projector and the projected image display portion. Normally, it is preferable that the light is incident so as to be a p-polarized light which vibrates in a direction parallel to the plane of incidence of the projected image display portion.

The windshield glass of the invention is particularly effective for a head-up display system used in combination with a projector using a laser, an LED, or an OLED in which an emission wavelength is not continuous in a visible light region as a light source. This is because, the center wavelength of selective reflection of the cholesteric liquid crystal layer can be adjusted in accordance with each emission wavelength. In addition, the windshield glass can also be used for projection of a display such as a liquid crystal display device (LCD) or an OLED in which display light is polarized.

[Examples]

Hereinafter, the invention will be described more specifically with reference to the examples. Materials, reagents, amounts of substances and percentages thereof, and operations shown in the following examples can be suitably changed within a range not departing from the gist of the invention. Therefore, the ranges of the invention are not limited to the following examples.

<Manufacturing of Half-Mirror Film>

A liquid crystal compound, a horizontal orientation agent, a clockwise turning chiral agent, and a polymerization initiator, were mixed with each other in a solvent and a cholesteric liquid crystal mixture (R) was prepared. The amount of chiral agent used was adjusted to prepare coating solutions (R1) to (R3). When a single-layered cholesteric liquid crystal layer was manufactured on a temporary support by using each of the coating solutions in the same manner as in the manufacturing of a circularly polarized light reflecting layer which will be described later and reactivity was confirmed, all of the manufactured cholesteric liquid crystal layers were right-handed circularly polarized reflecting layer, and center wavelengths of selective reflection were respectively 540 nm, 623 nm, and 766 nm. In addition, center wavelengths of the selective reflection from the appearance which were observed from the reflection spectra emitted at an angle of incidence of 60 degrees with.respect to the cholesteric liquid crystal layers and observed at an angle of emission of 60 degrees were respectively 450 nm, 520 nm, and 640 nm.

A half-mirror film was manufactured in the laminating order shown in Table 1 by the following procedure. B in the table is a layer manufactured using the coating solution (R1), G in the table is a layer manufactured using the coating solution (R2), R in the table is a layer manufactured using the coating solution (R3), and the film thicknesses were set as B: 3.55 μm, G: 5 μm, and R: 5.15 μm.

(1) A coating solution for a first layer was applied to the surface of a rubbing treatment surface of the temporary support with a wire bar at room temperature.
(2) The coating solution was dried at room temperature to remove the solvent, and then, heating was performed to have cholesteric liquid crystalline phases. Then, the cholesteric liquid crystalline phases were fixed with UV irradiation, and a cholesteric liquid crystal layer was manufactured and cooled at room temperature.
(3) A coating solution for a second layer was applied to a surface of the obtained cholesteric liquid crystal layer, and the steps (1) and (2) were repeatedly performed. A coating solution for a third layer was further applied to a surface of the obtained second cholesteric liquid crystal layer, and the steps (1) and (2) were repeatedly performed, to form a half-mirror film including three cholesteric liquid crystal layers on the temporary support.

<Manufacturing of Half-Mirror Film including Retardation Layer>

In the cholesteric liquid crystal mixture (R) described above, a composition to which the chiral agent was not added was used as a coating layer. The coating layer was applied to the rubbing treatment surface of the temporary support which was subjected to the rubbing treatment, with a wire bar at room temperature. The coating solution was dried to remove the solvent, and then, heating was performed to have liquid crystalline phases. Then, the liquid crystalline phases were fixed with UV irradiation, and a retardation layer having a film thickness of 1.8 μm was manufactured and cooled at room temperature. When the front phase difference at a wavelength of 550 nm was measured, the front phase difference was 300 nm.

(11) The coating layer (R1) was applied to the surface of the retardation layer with a wire bar at room temperature.
(12) The coating solution was dried at room temperature to remove the solvent, and then, heating was performed to have cholesteric liquid crystalline phases. Then, the cholesteric liquid crystalline phases were fixed with UV irradiation, and a cholesteric liquid crystal layer was manufactured and cooled at room temperature.
(13) The coating solution (R2) was applied to a surface of the obtained cholesteric liquid crystal layer, and the steps (11) and (12) were repeatedly performed. The coating solution (R3) was further applied to the surface of the obtained second cholesteric liquid crystal layer, and the steps (11) and (12) were repeatedly performed to form a half-mirror film formed of three cholesteric liquid crystal layers on the temporary support.

The anisotropy of the refractive index of the cholesteric liquid crystal layers was $\Delta n = 0.07$.

The value of $\Delta n$ was calculated by the following expression, with a relationship of $W = \Delta n \times P$ (pitch), by measuring a reflectivity of each selective reflection peak (center wavelength of selective reflection: $\lambda$) to acquire a half width W. n is an average refractive index of of cholesteric liquid crystal layer.

$$\Delta n = W/P = W/(\lambda/n)$$

<Manufacturing of Samples and Evaluation>

The inner formation or the outer sticking of the obtained half-mirror film was performed on the laminated glass as shown in Table 1, and samples were manufactured.

The samples of the inner formation were manufactured as follows. In regards to polyvinylbutyral films (S-LEC Film manufactured by Sekisui Chemical Co., Ltd., thickness of 15 mil (0.38 mm)), a thickness distribution was applied by using a roller, as disclosed in Example 2 of JP1990-279437A (JP-H02-279437A). The half-mirror film after peeling off the temporary support was interposed between two polyvinylbutyral films to which the thickness distribution was applied as described above, to obtain a wedge shape, and this was further interposed between two glass plates (FL2 manufactured by Central Glass Co., Ltd., 300 × 300 mm, thickness of 2 mm), and an angle formed by a front surface and a rear surface of the glass was set so that the displayed images are not superimposed. A laminate obtained by laminating the obtained glass plate, the polyvinylbutyral film, the half-mirror film, the polyvinylbutyral film, and the glass plate in this order were heated at 100°C under the reduced pressure (-0.1 MPa) and fixed for 1 hour for pre pressure-bonding. The laminate was further pressure-bonded with an autoclave under the environment at 120°C 1.3 MPa for 20 minutes.

The sample of the outer sticking was obtained by bonding the half-mirror film to the surface of the laminated glass manufactured in the same manner as in the formation of the laminated glass, except that the half-mirror film is not interposed between the two polyvinylbutyral films, with an adhesive, and peeling the temporary support.

The obtained sample was disposed as shown in Fig. 1. In an example using the half-mirror film including the retardation layer, the sample was installed so that an angle formed by a p-polarized light transmission axis of a spectrophotometer and a rubbing direction of the retardation layer of the laminated glass becomes 45 degrees. The projected light was emitted by the DLP projector which emits natural light including p-polarized light and s-polarized light and light was incident at 60 degrees of the normal line of the surface of the sample. As shown in the drawing, regarding the reflected light in a direction of 60 degrees with respect to the normal line of the surface of the sample, reflectivity thereof in a case of the p-polarized light and s-polarized light was measured and an average reflectivity was acquired. An average value of the average reflectivity at wavelengths of 450 nm, 520 nm, and 640 nm was evaluated as the brightness. In addition, a double image was visually confirmed. Further, the evaluation was performed through polarized sunglasses whether or not the projected image is recognized.

The results are shown in Table 1.

[Table 1]

| Shape | outer sticking | outer sticking | outer sticking | Inner formation | Inner formation | Inner formation | Wedge-shaped glass |
|---|---|---|---|---|---|---|---|
| Laminating order (left side is incidence side of light) | BGR | RGB | Retardation layer + BGR | BGR | RGB | Retardation layer + BGR | - |
| Brightness | 57 | 57 | 65 | 55 | 55 | 65 | 17 |
| Double image | None (wedge-shaped glass effect) | None (wedge-shaped glass effect) | None (wedge-shaped glass effect) | Recognized | Substantially not recognized | Substantially not recognized | None |
| Sunglass suitability | Observed | Observed | Observed | Observed | Observed | Observed | Not observed |

It has been found that generation of a double image is reduced in the examples of the outer sticking. Meanwhile, substantially the same brightness was obtained in the examples of the outer sticking and the examples of the inner formation.

Explanation of References

1:  windshield glass
2:  half-mirror film of inner formation
3:  projector
4:  observation position
5:  curved mirror

**Claims**

1. A windshield glass comprising:

   a projected image display portion on which a projected image is displayed with projected light; and
   a second glass plate, an intermediate layer, and a first glass plate provided in this order from an incidence side of the projected light,
   wherein the intermediate layer has awedge-shaped cross section,
   the projected image display portion at least includes a half-mirror film, and
   the half-mirror film includes a cholesteric liquid crystal layer.

2. The windshield glass according to claim 1,

   wherein, in the projected image display portion, the first glass plate, the intermediate layer, the second glass plate, and the half-mirror film are provided in this order.

3. The windshield glass according to according to claim 1,

   wherein the half-mirror film is included in the intermediate layer.

4. The windshield glass according to any one of claims 1 to 3,

   wherein the half-mirror film includes two or more cholesteric liquid crystal layers, and center wavelengths of selective reflection of the two or more cholesteric liquid crystal layers are different from each other.

5. The windshield glass according to claim 4,

   wherein the half-mirror film includes a cholesteric liquid crystal layer having a center wavelength of selective reflection at 680 nm to 850 nm, a cholesteric liquid crystal layer having a center wavelength of selective reflection at 600 nm to 680 nm, and a cholesteric liquid crystal layer having a center wavelength of selective reflection at 490 nm to 600 nm.

6. The windshield glass according to claim 4 or 5,

   wherein the cholesteric liquid crystal layer closest to the incidence side of the projected light has the longest center wavelength of selective reflection.

7. The windshield glass according to claim 6,

   wherein the half-mirror film includes a cholesteric liquid crystal layer having a center wavelength of selective reflection at 580 to 700 nm, a cholesteric liquid crystal layer having a center wavelength of selective reflection at 500 to 580 nm, and a cholesteric liquid crystal layer having a center wavelength of selective reflection at 400 to 500 nm, in this order from the incidence side of the projected light.

**8.** The windshield glass according to any one of claims 1 to 4,

   wherein the half-mirror film includes a $\lambda/2$ retardation layer on the incidence side of the projected light of the cholesteric liquid crystal layer.

**9.** The windshield glass according to claim 8,

   wherein a front phase difference of the $\lambda/2$ retardation layer is in a range of 190 nm to 390 nm.

**10.** The windshield glass according to claim 8 or 9,

   wherein the half-mirror film includes the $\lambda/2$ retardation layer, a cholesteric liquid crystal layer having a center wavelength of selective reflection at 490 nm to 600 nm, a cholesteric liquid crystal layer having a center wavelength of selective reflection at 600 nm to 680 nm, and a cholesteric liquid crystal layer having a center wavelength of selective reflection at 680 nm to 850 nm in this order.

**11.** The windshield glass according to any one of claims 8 to 10,

   wherein a slow axis of the $\lambda/2$ retardation layer with respect to an upper vertical direction of the windshield glass is in a range of +40° to +65° or in a range of -40° to -65°.

**12.** The windshield glass according to any one of claims 1 to 11,

   wherein the intermediate layer is a resin film.

**13.** The windshield glass according to claim 12,

   wherein the resin film includes polyvinylbutyral.

**14.** A head-up display system comprising:

   the windshield glass according to any one of claims 1 to 13; and
   a projector which emits the projected light.

**15.** The head-up display system according to claim 14,

   wherein the projected light contains p-polarized light vibrating in a direction parallel to a plane of incidence and s-polarized light vibrating in a direction perpendicular to the plane of incidence.

**16.** The head-up display system according to claim 15,

   wherein the projector is a digital light processing type projector.

**17.** The head-up display system according to claim 15 or 16,

   wherein the projected light is incident at an angle of 45° to 70° with respect to a normal line of a surface of the projected image display portion on the incidence side of the projected light.

**18.** The head-up display system according to any one of claims 14 to 17,

   wherein the projected light is incident from the bottom at the time of using the windshield glass.

FIG. 1

## INTERNATIONAL SEARCH REPORT

| | International application No. |
|---|---|
| | PCT/JP2016/054791 |

### A. CLASSIFICATION OF SUBJECT MATTER

*G02B27/01*(2006.01)i, *B60J1/00*(2006.01)i, *B60J1/02*(2006.01)i, *C03C27/12*(2006.01)i, *G02B5/26*(2006.01)i, *G02B5/30*(2006.01)i

According to International Patent Classification (IPC) or to both national classification and IPC

### B. FIELDS SEARCHED

Minimum documentation searched (classification system followed by classification symbols)
G02B27/01, B60J1/00, B60J1/02, C03C27/12, G02B5/26, G02B5/30

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y<br>A | JP 2011-207645 A  (Nippon Sheet Glass Co., Ltd.),<br>20 October 2011 (20.10.2011),<br>paragraphs [0002] to [0005], [0021]; fig. 1, 11, 13<br>(Family: none) | 1-5,12-18<br>6-11 |
| Y<br>A | JP 4-502525 A  (Libby Owens Ford Co.),<br>07 May 1992 (07.05.1992),<br>page 3, upper right column, line 23 to page 4, lower left column, line 9; fig. 1 to 3<br>& WO 1991/006031 A1<br>description, page 4, line 32 to page 8, line 21; fig. 1 to 3<br>& EP 450058 A          & CA 2027348 A1 | 1-5,12-18<br>6-11 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 25 April 2016 (25.04.16) | 17 May 2016 (17.05.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.

PCT/JP2016/054791

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 2012-51780 A  (Hyundai Motor Co.),<br>15 March 2012 (15.03.2012),<br>paragraphs [0001] to [0005], [0019] to [0020];<br>fig. 1 to 4, 7<br>& US 2012/0052264 A1<br>paragraphs [0006] to [0009], [0045] to [0047];<br>fig. 1 to 4, 7<br>& DE 102010060936 A     & KR 10-2012-0020917 A | 1-5,12-18<br>6-11 |
| Y<br>A | JP 2014-71250 A  (Dainippon Printing Co., Ltd.),<br>21 April 2014 (21.04.2014),<br>paragraphs [0022], [0055], [0058] to [0060];<br>fig. 3<br>(Family: none) | 1-5,12-18<br>6-11 |
| Y<br>A | JP 2005-331777 A  (Asahi Glass Co., Ltd.),<br>02 December 2005 (02.12.2005),<br>paragraphs [0033], [0051] to [0055]; fig. 9<br>(Family: none) | 1-5,12-18<br>6-11 |
| P,A | WO 2015/166872 A1  (Sharp Corp.),<br>05 November 2015 (05.11.2015),<br>paragraphs [0030] to [0031], [0062]; fig. 1 to 2<br>(Family: none) | 6-7 |
| A | JP 64-35478 A  (Kaiser Aerospace and Electronics Corp.),<br>06 February 1989 (06.02.1989),<br>entire text; all drawings<br>& EP 296710 A2          & DE 3887930 T<br>& CA 1293873 A | 1-18 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011505330 A
- JP 2006512622 A
- US 4683327 A
- US 5622648 A
- US 5770107 A
- WO 9522586 A
- WO 9524455 A
- WO 9700600 A
- WO 9823580 A
- WO 9852905 A
- JP 1272551 A
- JP H01272551 A
- JP 6016616 A
- JP H0616616 A
- JP 7110469 A
- JP H07110469 A
- JP 11080081 A
- JP H1180081 A
- JP 2001328973 A
- US 2367661 A
- US 2367670 A
- US 2448828 A
- US 2722512 A
- US 3046127 A
- US 2951758 A
- US 3549367 A
- JP 60105667 A
- JP S60105667 A
- US 4239850 A
- US 4212970 A
- JP 2007272185 A
- JP 2012203237 A
- US 5013134 A
- JP 2008201667 A
- JP 2141720 A
- JP H02141720 A
- JP 10096874 A
- JP H1096874 A
- JP 2003098470 A
- JP 2279437 A
- JP H02279437 A

**Non-patent literature cited in the description**

- Liquid Crystal Chemistry Experiment Introduction. Sigma Publication, 2007, 46
- Handbook of liquid crystals Editorial Committee of Handbook of liquid crystals. Maruzen, 196
- *Makromol. Chem.,* 1989, vol. 190, 2255
- *Advanced Material,* 1993, vol. 5, 107
- chiral agents for TN and STN. handbook of liquid crystal device. The Japan Society for the Promotion of Science, 1989, vol. 3, 199